# EUROPÄISCHE PATENTSCHRIFT

(11) **EP 1 316 385 B1**
(45) Veröffentlichungstag und Bekanntmachung des Hinweises auf die Patenterteilung: **22.11.2006**
(21) Anmeldenummer: 02023182.5
(22) Anmeldetag: 16.10.2002
(51) Int. Cl.: B23Q 5/04, B23Q 1/54

(54) **Einwechselbares Werkzeug-Aggregat**
Interchangeable tool-head
Tête d'outil interchangeable

(30) Priorität: 30.11.2001 DE 10158898
(43) Veröffentlichungstag der Anmeldung: 04.06.2003
(73) Patentinhaber: Weinmann Holzbausystemtechnik GmbH, 72813 St. Johann (DE)
(72) Erfinder: Weinmann, Karl, 72813 St. Johann (DE); Zeller, Christoph, 77756 Hausach (DE)
(74) Vertreter: Möbus, Daniela

(56) Entgegenhaltungen:
- US-A- 3 460 435
- US-E- R E32 415

## Beschreibung

Die Erfindung betrifft ein einwechselbares Werkzeug-Aggregat zur Anordnung an der Spindel einer Werkzeugmaschine, das eine Verstellung des Winkels des Werkzeugs zur Spindelachse und eine Schwenkbewegung des Werkzeugs um die Spindelachse erlaubt gemäß dem Oberbegriff von Anspruch 1.

Bei der Herstellung von Schrägbohrungen in Werkstücke oder der Anfertigung von Gehrungsschnitten bei der Holzbearbeitung ist eine Schrägstellung des Werkzeugs bezüglich der Spindelachse der Werkzeugmaschine notwendig. Außerdem ist eine Verschwenkung des Werkzeugs auch in schräg gestellter Position um die Spindelachse wünschenswert, um Umspannvorgänge des Werkzeugs bei der Bearbeitung zu vermeiden. Es sind für diese Anwendungen Werkzeug-Aggregate bekannt, bei denen eine Verstellung des Winkels des Werkzeugs zur Spindelachse von Hand möglich ist. Die Schwenkbewegung des schräg gestellten Werkzeugs um die Spindelachse wird von der Maschinenspindel übernommen. Diese bekannten Aggregate haben jedoch den Nachteil, dass zur Einstellung des Winkels des Werkzeugs der Bearbeitungsvorgang unterbrochen und die Maschine stillgesetzt werden muss.

Es ist daher bereits ein Werkzeug-Aggregat vorgeschlagen worden, bei dem eine automatische Verstellung des Winkels des Werkzeugs zur Spindelachse durch einen im Aggregat integrierten Motor mit einer elektronischen Steuerung während des Betriebs der Maschine möglich ist. Dieses bekannte Aggregat ist jedoch in der Herstellung sehr aufwändig und damit teuer. Durch den Motor ist auch die übertragbare Leistung begrenzt. Darüber hinaus ist das bekannte Werkzeug-Aggregat durch die relativ empfindlichen elektronischen Komponenten unter den rauen Einsatzbedingungen bei einer Werkzeugmaschine sehr störungsanfällig.

Aus der US 3,460,435 ist eine gattungsgemäße Werkzeugmaschine bekannt, bei der ein Werkzeughalter um eine Achse schwenkbar an einem Zwischenstück angeordnet ist. Das Zwischenstück ist um eine dazu senkrechte Achse rotierbar angeordnet. Es ist ein Antrieb vorgesehen, mit dem der Werkzeughalter verschwenkt werden kann.

Der vorliegenden Erfindung liegt daher die Aufgabe zugrunde, ein einwechselbares Werkzeug-Aggregat zu schaffen, das eine Verstellung des Winkels des Werkzeugs zur Spindelachse sowie eine Schwenkbewegung des Werkzeugs um die Spindelachse während des Betriebs der Maschine erlaubt und das konstruktiv einfach und robust ist.

Diese Aufgabe wird durch eine einwechselbares Werkzeug-Aggregat mit den Merkmalen des Anspruchs 1 gelöst.

Soll der Winkel der Werkzeugaufnahme zur Spindelachse verstellt werden, so wird der Verstellteil mit dem Maschinenteil gekoppelt und der Trägerteil verdreht. Die dadurch entstehende Relativbewegung zwischen Trägerteil und Verstellteil wird vom Getriebe in eine Verstellung des Winkels übersetzt. Sobald die gewünschte Winkelposition erreicht ist, wird der Verstellteil wieder mit dem Trägerteil gekoppelt und kann dann gemeinsam mit diesem verschwenkt werden.

Die Winkelverstellung des Werkzeugs erfolgt beim erfindungsgemäßen Aggregat also rein mechanisch. Im Vergleich zur bekannten elektromotorischen Winkelverstellung ist eine mechanische Winkelverstellung sehr viel weniger störanfällig. Außerdem können deutlich größere Leistungen übertragen werden. Die Bauweise des gesamten Aggregats wird kleiner als bei einem Aggregat mit einem integrierten Motor und integrierter elektronischer Steuerung. Darüber hinaus ist es auch möglich, bekannte Aggregate mit einer Möglichkeit zur Verstellung des Winkels des Werkzeugs zur Spindelachse von Hand zu einem erfindungsgemäßen Aggregat umzubauen, indem der Verstellteil mit einem Getriebe ergänzt und an der Werkzeugmaschine selbst eine Möglichkeit zur drehfesten Verbindung dieses zusätzlichen Teils geschaffen wird.

Der Verstellteil ist mittels eines Fixierbolzens am Werkzeugmaschinenteil festlegbar. Bei einer besonders vorteilhaften Ausgestaltung ist der Verstellteil als ein Ring ausgeführt, der den rotierbaren Trägerteil umschließt und koaxial zu diesem angeordnet ist. Der äußere Ring wird bei Kopplung mit dem Trägerteil mit diesem mitrotiert oder bei Verbindung mit dem Werkzeugmaschinenteil festgehalten, während der innere Trägerteil um die Spindelachse verdreht wird. Das Getriebe überträgt die dadurch entstehende Relativbewegung zwischen Trägerteil und Verstellteil auf die Werkzeugaufnahme, wodurch es abhängig von der Drehrichtung und der Größe der Drehbewegung des Trägerteils zu einer entsprechenden Veränderung der Winkelstellung der Werkzeugaufnahme bezüglich der Spindelachse kommt.

Möchte man eine völlig unabhängige Einstellung des Winkels der Werkzeugaufnahme zur Spindelachse und der Schwenkstellung der Werkzeugaufnahme um die Spindelachse erreichen, so kann auch der Werkzeugmaschinenteil um die Rotationsachse des Trägerteils verdrehbar angeordnet sein, sodass bei mit dem Werkzeugmaschinenteil verbundenen Verstellteil dieser unabhängig vom Trägerteil um die gemeinsame Rotationsachse rotierbar ist. Es ist dann möglich, das Werkzeug gegenüber der Spindelachse schräg zu stellen, und gleichzeitig eine Schwenkbewegung des Werkzeugs um die Spindelachse auszuführen. Diese beiden Bewegungen sind jetzt vollständig entkoppelt.

Das erfindungsgemäße Aggregat lässt sich auch ohne weiteres so ausgestalten, dass die Verdrehung des Trägerteils und/oder des Verstellteils während einer Werkstückbearbeitung durchführbar ist. Die Maschine muss also nicht mehr stillgesetzt werden, um die Winkelstellung des Werkzeugs zu verändern.

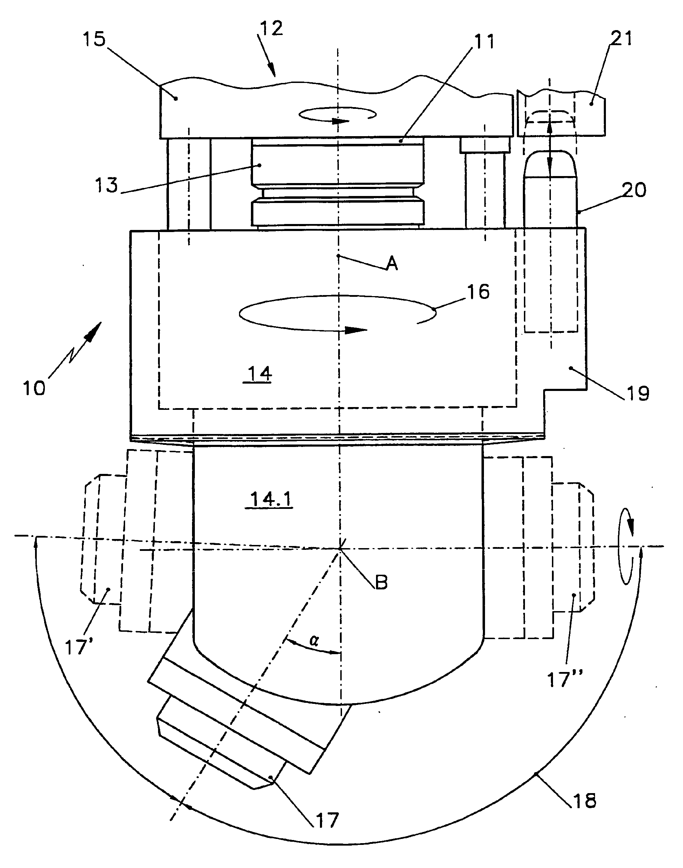

Nachfolgend wird ein bevorzugtes Ausführungsbeispiel eines erfindungsgemäßen Aggregats anhand der Zeichnung näher beschrieben.

Die einzige Figur zeigt ein einwechselbares Werkzeug-Aggregat 10, das an einer Spindel 11 einer in der Zeichnung nur angedeuteten Werkzeugmaschine 12 befestigt ist. Mit 13 ist der Antriebskegel des Aggregats 10 bezeichnet. Das Werkzeug-Aggregat 10 weist einen inneren Trägerteil 14 auf, der mit einem C-Achsen-Antrieb 15 der Werkzeugmaschine 12 verbunden ist und durch diesen um die Achse A der Maschinenspindel 11 rotierbar ist, was durch den Pfeil 16 angedeutet ist. Im unteren Bereich 14.1 des Trägerteils 14 ist eine Werkzeugaufnahme 17 um eine Schwenkachse B senkrecht zur Spindelachse A schwenkbar angeordnet, wobei in der Zeichnung zwei weitere mögliche Schwenkpositionen 17' und 17'' der Werkzeugaufnahme gestrichelt eingezeichnet sind. Aus der Zeichnung wird deutlich, dass der eingezeichnete Schwenkbereich 18 der Werkzeugaufnahme 17 mehr als 180° beträgt.

Zur automatischen Verstellung des Winkels a, den die Werkzeugaufnahme 17 mit der Spindelachse A einschließt, ist der obere Bereich des Trägerteils 14 des Aggregats 10 von einem Verstellteil 19 in Form eines äußeren Rings umgeben, der mittels eines Fixierbolzens 20 mit einem an der Werkzeugmaschine 12 angeordneten Block 21 oder aber mit dem Trägerteil 14 verbindbar ist. Wird der Trägerteil 14 verdreht und ist der Verstellteil 19 durch den Fixierbolzen am Block 21 festgelegt, so wird die Relativbewegung zwischen dem Trägerteil 14 und dem Verstellteil 19 über ein hier nicht näher dargestelltes Getriebe auf die Werkzeugaufnahme 17 übertragen und dadurch deren Winkel α gegenüber der Spindelachse A verändert. Anschließend wird der Verstellteil 19 wieder mit dem Trägerteil 14 gekoppelt, sodass die Werkzeugaufnahme 17 mit dem eingestellten Winkel α um die Achse A zur Werkstückbearbeitung geschwenkt werden kann.

Es ist auch möglich, den Block 21 ebenfalls um die Spindelachse A rotierbar zu lagern, sodass bei Festlegung des Verstellteils 19 mittels des Fixierbolzens 20 dieser durch Drehen des Blocks 21 unabhängig vom Trägerteil 14 um die gemeinsame Rotationsachse A rotierbar ist. Der Block 21 kann dabei ringförmig und rotierbar gestaltet oder auf einer Ringbahn um den C-Achsen-Antrieb 15 bewegbar sein. Bei einer solchen Ausgestaltung ist die Schwenkung der Werkzeugaufnahme 17 um die Spindelachse A vollständig unabhängig vom Schwenkwinkel a um die Achse B einstellbar, während bei nicht unabhängig vom Trägerteil 14 rotierbarer Anordnung des Verstellteils 19 der Winkel α nur durch Änderung der Schwenkstellung der Werkzeugaufnahme 17 um die Spindelachse A und somit nur außerhalb einer Werkstückbearbeitung einstellbar ist. Sind die Teile 14 und 19 hingegen unabhängig voneinander rotierbar, so kann die Verstellung der Werkzeugaufnahme um die Schwenkachsen A und B auch während einer Werkstückbearbeitung erfolgen.

## Patentansprüche

1. Einwechselbares Werkzeug-Aggregat (10) zur Anordnung an der Spindel (11) einer Werkzeugmaschine (12), das eine Verstellung des Winkels (a) des Werkzeugs zur Spindelachse (A) und eine Schwenkbewegung des Werkzeugs um die Spindelachse (A) erlaubt, wobei das Aggregat (10) einen koaxial zur Spindelachse (A) rotierbaren Trägerteil (14), an dem eine Werkzeugaufnahme (17) um eine Achse (B) senkrecht zur Spindelachse (A) schwenkbar angeordnet ist, und einen mit dem Trägerteil (14) oder mit einem Werkzeugmaschinenteil (21) drehfest verbindbaren Verstellteil (19) aufweist, wobei der Verstellteil (19) über ein Getriebe mit der Werkzeugaufnahme (17) verbunden ist und das Getriebe eine Relativbewegung zwischen dem Trägerteil (14) und dem Verstellteil (19) in eine Änderung der Winkellage (a) der Werkzeugaufnahme (17) bezüglich der Spindelachse (A) übersetzt, **dadurch gekennzeichnet, dass** der Verstellteil (19) mittels eines Fixierbolzens (20) am Werkzeugmaschinenteil (21) festlegbar ist.

2. Werkzeug-Aggregat nach Anspruch 1, **dadurch gekennzeichnet, dass** der Verstellteil (19) ein Ring ist, der den Trägerteil (14) umschließt und koaxial zu diesem angeordnet ist.

3. Werkzeug-Aggregat nach Anspruch 1 oder 2, **dadurch gekennzeichnet, dass** der Werkzeugmaschinenteil (21) um die Rotationsachse (A) des rotierbaren Trägerteils (14) ebenfalls verdrehbar angeordnet ist, sodass bei mit dem Werkzeugmaschinenteil (21) verbundenen Verstellteil (19) der Verstellteil (19) unabhängig vom Trägerteil (14) um die gemeinsame Rotationsachse (A) rotierbar ist.

4. Werkzeug-Aggregat nach einem der Ansprüche 1 bis 3, **dadurch gekennzeichnet, dass** die Verdrehung des Trägerteils (14) und/oder des Verstellteils (19) während einer Werkstückbearbeitung durchführbar ist.

## Claims

1. Changeable tool unit (10) to be disposed on the spindle (11) of a machine tool (12) that enables adjustment of the angle (α) of the tool in relation to the axis of the spindle (A) and a swivelling movement of the tool about the axis of the spindle, whereby the unit (10) has a support section (14), which can rotate coaxially in relation to the axis of the spindle (A), there being a tool uptake means (17) that can swivel about an axis (B) running vertically in relation to the spindle axis (A), and a shifting section (19) that can be connected, rotationally fixed, to the support section (14) or to a machine tool section, whereby the shifting section is connected to the tool uptake means by gearing and the gearing converts a relative movement between the support section (14) and the shifting section (19) into a change in the angular setting (α) of the tool uptake means (17) in relation to the spindle axis (A), **characterized in that** the shifting section (19) can be fastened to the machine tool section (21) by means of an attachment bolt (20).

2. Tool unit in accordance with claim 1, **characterized in that** the shifting section (19) is a ring surrounding the support section (14) and is disposed coaxially in relation to it.

3. Tool unit in accordance with claims 1 or 2, **characterized in that** the machine tool section (21) is disposed such that it can rotate about the rotation axis (A) of the support section (14) that can rotate such that, when the shifting section (19) is connected to the machine tool section (21), the shifting section (19) is able to rotate, independently of the supporting section (14), about the common rotation axis (A).

4. Machine unit in accordance with one of claims 1 to 3, **characterized in that** the rotation of the support section (14) and/or of the shifting section (19) can occur while the given work-piece is being worked.

## Revendications

1. Groupe d'outil (10) interchangeable à placer sur la broche (11) d'une machine-outil (12), qui permet un réglage de l'angle (a) de l'outil par rapport à l'axe (A) de la broche et un mouvement de pivotement de l'outil autour de l'axe (A) de la broche, le groupe (10) comportant une partie de support (14) pouvant tourner coaxialement à l'axe (A) de la broche, sur laquelle est disposé un logement d'outil (17) qui peut pivoter autour d'un axe (B) perpendiculaire à l'axe (A) de la broche, ainsi qu'une partie de réglage (19) qui peut être reliée à la partie de support (14) ou à une partie (21) de la machine-outil solidairement en rotation, la partie de réglage (19) étant reliée par l'intermédiaire d'une transmission au logement d'outil (17) et la transmission transformant un mouvement relatif entre la partie de support (14) et la partie de réglage (19) en une variation de la position angulaire (a) du logement d'outil (17) par rapport à l'axe (A) de la broche, **caractérisé en ce que** la partie de réglage (19) peut être fixée sur la partie de machine-outil (21) au moyen d'un boulon de fixation (20).

2. Groupe d'outil selon la revendication 1, **caractérisé en ce que** la partie de réglage (19) est une bague qui enferme la partie de support (14) et est disposée coaxialement à celle-ci.

3. Groupe d'outil selon la revendication 1 ou 2, **caractérisé en ce que** la partie de machine-outil (21) est également disposée de manière à pouvoir tourner autour de l'axe de rotation (A) de la partie de support (14) rotative, ce qui fait que lorsque la partie de réglage (19) est reliée à la partie de machine-outil (21), la partie de réglage (19) peut tourner autour de l'axe de rotation (A) commun, indépendamment de la partie de support (14).

4. Groupe d'outil selon l'une des revendications 1 à 3, **caractérisé en ce que** la rotation de la partie de support (14) et/ou de la partie de réglage (19) peut être exécutée pendant l'usinage d'une pièce.
